# EUROPÄISCHE PATENTANMELDUNG

(11) **EP 0 838 157 A1**
(43) Veröffentlichungstag der Anmeldung: **29.04.1998**
(21) Anmeldenummer: 96115474.7
(22) Anmeldetag: 26.09.1996
(51) Int. Cl.: A23G 1/00, A23G 1/22, A23G 3/02, A21B 3/13

(54) **Verfahren, Vorrichtung und Giessplatte für die Herstellung von tafelförmiger Schokolade oder Schokoladenbackwaren**

(71) Anmelder: Griesson GmbH & Co. KG, 56751 Polch (DE)
(72) Erfinder: Gries, Heinz, 56330 Koberngondorf (DE)
(74) Vertreter: Stenger, Watzke & Ring Patentanwälte

(57) **Zusammenfassung**

Um einen Motivwechsel im Rahmen der Herstellung von tafelförmiger Schokolade oder Schokoladenbackwaren zu vereinfachen, den Gesamtbestand an Gießplatten bei einer vorgegebenen Motiv- oder Beschriftungszahl (7) zu verringern, Lagerraum einzusparen und eine flexiblere Herstellungsführung mit geringeren Ausfallzeiten zu ermöglichen, wird die Verwendung einer Gießplatte vorgeschlagen, die auf ihrer Oberseite und ihrer Unterseite mit Gießformen (6) versehen ist.

## Beschreibung

Die Erfindung betrifft ein Verfahren, eine Vorrichtung und eine Gießplatte zur Herstellung von tafelförmiger Schokolade oder Schokoladenbackwaren, wie Schokokeksen und Schokowaffeln mit einer Backwaren- und einer Schokoladenseite. Die Oberfläche der Schokolade bzw. der Schokoladenseite weist ein Motiv und/oder eine Beschriftung erhaben und/oder vertieft auf. Die Motive bzw. Beschriftungen können entsprechend der Phantasie des Gestalters völlig unterschiedlich sein, wie bekannte Schokokekse und Schokowaffeln zeigen, die mit Sternzeichen in symbolischer Darstellung oder auch naturalistischen Abbildungen bekannter Städte oder Bauten-Motiven, Wappen, Marken und dgl. versehen sind. Die Herstellung erfolgt verfahrensmäßig dabei derart, daß flüssige Schokolade in einzelne Gießformen einer Gießplatte gegossen wird, die ein Negativ der Schokoladenseite mit dem entsprechenden Motiv und/oder der Beschriftung darstellen. Die Schokolade wird sodann abgekühlt und aus den Formen der Gießplatte ausgeformt und einer Verpackung zugeführt.

Bei einer bekannten Anlage zur Herstellung von tafelförmigen Schokoladenbackwaren wird hierzu eine Gießmaschine eingesetzt, die oberhalb einer Transportstraße angeordnet ist, auf deren Rollen Gießplatten in Laufrichtung hintereinander angeordnet sind, deren Formen reihenweise hintereinander über Gießöffnungen dosiert mit flüssiger Schokolade gefüllt werden. In die noch flüssige, in der jeweiligen Form befindliche Schokolade wird sodann von oben die Backware eingedrückt, die sich in der nachfolgenden Kühlstation beim Erstarren der Schokolade mit dieser verbindet. Nach dem Entleeren der Formen der Gießplatten findet eine Rückführung der Gießplatten zur Beschickungsstation und erneute Positionierung auf der Transportbahn für einen neuen Herstellungsvorgang statt. Nachteilig ist dabei, daß jede Gießplatte aufgrund der zum Entformen notwendigen Wendung um 180° mit der Formenseite nach unten gerichtet zurücktransportiert wird und an der Eingabestation nach einer erneuten Wendung um 180° wieder in die Gießposition verbracht werden muß. Wird es dann erforderlich, die Herstellung auf andere Motive und/oder Beschriftungen umzustellen, müssen sämtliche Gießplatten aus der Anlage entfernt werden, zu einem Gießplattenlager gebracht werden und muß ein Satz neuer Gießplatten mit entsprechenden Motiven in die Anlage eingesetzt werden. Der Gießplattenwechsel ist außerordentlich zeit- und arbeitsaufwendig, erfordert ein großes Plattenlagermagazin und läßt eine flexible Verfahrensweise und Benutzung der Anlage nicht zu.

Der Erfindung liegt daher die **Aufgabe** zugrunde, unter Meidung der genannten Nachteile den Motivwechsel im Rahmen der Herstellung von tafelförmiger Schokolade oder Schokoladenbackwaren zu vereinfachen, den Gesamtbestand an Gießplatten bei einer vorgegebenen Motiv- oder Beschriftungszahl zu verringern, Lagerraum einzusparen und eine flexiblere Herstellungsführung mit geringen Ausfallzeiten zu ermöglichen.

Die Aufgabe ist an einem Herstellungsverfahren der eingangs genannten Art erfindungsgemäß dadurch gelöst, daß Gießplatten verwendet werden, die auf ihrer Oberseite und ihrer Unterseite mit Gießformen versehen sind, daß die Gießformen der Oberseite in an sich bekannter Weise mit flüssiger Schokolade beschickt werden, und daß nach dem Ausformen des Fertigerzeugnisses die Gießplatten entweder in der vorgegebenen Position mit ihrer Unterseite oder um ein 180° gewendet erneut mit ihrer Oberseite dem nächsten Gießvorgang zugeführt werden, wobei wahlweise der gesamte Gießplattensatz gemeinsam oder jede einzelne Gießplatte entweder mit ihrer Oberseite oder mit ihrer Unterseite dem nächsten Gießvorgang zuführbar sind. Hierdurch wird erreicht, daß pro Gießplatte eine doppelte Motivzahl zur Verfügung steht und je nach Verfahrensführung entweder ein Gesamtmotivwechsel oder auch eine Einzelauswahl von Motiven in einfacher Weise zusammengestellt werden kann, ohne daß ein Gießplattenwechsel in der Gesamtheit oder einzelner Gießplatten erforderlich ist. Die Herstellung kann damit in erheblich größerer Flexibilität geführt werden, da nicht nur die Umstellung der Herstellung auf andere Motive vereinfacht ist, sondern auch ein Motivwechsel von Gießplatte zu Gießplatte, eine über die andere, ermöglicht ist.

Vorzugsweise werden Gießplatten verwendet, die auf ihrer jeweiligen Oberseite und Unterseite mit unterschiedlichen Motiven und/oder Beschriftungen in den Gießformen versehen sind. Hiermit ist die Führung der Herstellung mit abwechselnden Motiven hintereinander ermöglicht und ist die maximale Motivanzahl eines Gießplattensatzes für die Herstellung verdoppelt, wobei die Motivanzahl pro Formenplattensatz im Rahmen der Herstellung variabel gestaltbar ist. Es ist also möglich, mit einem Formenplattensatz zwei unterschiedliche Motivgestaltungen und -kombinationen zu produzieren, während man bislang hierzu zwei Formenplattensätze mit entsprechenden Lagerungsmöglichkeiten und aufwendigen Wechseleinrichtungen und Handhabungsvorgängen benötigte. Durch die Verwendung der erfindungsgemäß ausgestalteten Gießplatten ist eine variable Verfahrensführung ermöglicht.

Vorzugsweise werden die Gießplatten nach dem Füllen der Gießformen gerüttelt und nach dem Abkühlen der Schokolade, ggf. nach einem Twistvorgang jeweils mit einer Gegenplatte abgedeckt, sodann um 180° gewendet und unter Trennung der Gegenplatte mit dem Fertigprodukt, welches einer Verpackung zugeführt wird, zum erneuten Befüllen der Gießformen rückgeführt. Die Temperatur der Schokolade wird auf vorzugsweise etwa 30° C beim Gießvorgang eingestellt.

Die Vorrichtung zur Durchführung des oben beschriebenen Verfahrens ist erfindungsgemäß gekennzeichnet durch die folgenden in Produktionsrichtung hintereinander angeordneten und durch eine Transportstraße miteinander verbundenen Stationen:
a) Beschickungsstation für beidseitig mit Gießformen versehene Gießplatten,
b) wahlweise aktivierbare Wendestation für die Gießplatten,
c) Schokoladen-Gießmaschine,
d) Rüttelstrecke für mit Schokolade befüllte Gießplatten,
e) wahlweise aktivierbare Gebäckeinlegestrecke zur Herstellung von Schokokeksen oder Schokowaffeln,
f) eine oder mehrere hintereinander angeordnete Kühlzonen,
g) eine Twiststation, in der jede Gießplatte zur Vorbereitung der Entformung diagonal oder einander gegenüberliegend geringfügig gegeneinander verdreht wird,
h) Deckelaufleger zum Abdecken jeder Gießplatte mit einer Gegenplatte,
i) Ausformstation mit 180°-Wendevorrichtung und getrennter Weiterführung der leeren Gießplatten einerseits und der auf den Gegenplatten angeordneten ausgeformten Fertigwaren andererseits zu einer Verpackungseinrichtung,
   wobei für die Gießplatten eine Rücktransporteinrichtung zur Beschickungsstation vorgesehen ist. Dabei kann zur Erleichterung eines Gießplatten-Wechselns noch eine Formenwechsler-Station an einer geeigneten Stelle der Anlage, insbesondere hinter der Ausformstation, vorgesehen sein.

Die Transportstraße selbst ist vorzugsweise als Rollgang, Bandstraße oder Kettentransporteinrichtung ausgebildet.

Insgesamt wird mit der Vorrichtung der Erfindung eine raumsparende Anlage bereitgestellt, die eine kontinuierliche Führung des Verfahrens zur Herstellung tafelförmiger Schokolade oder Schokoladenbackwaren ermöglicht. Durch eine entsprechende Programmierung der Wendestation ist in Kombination mit den beidseitig beschickbaren Gießplatten eine variable Verfahrensführung bezüglich Motivkombinationen und dem Wechsel von Motiven innerhalb einer Charge und von Charge zu Charge möglich.

Die gemäß obigen Ausführungen erfindungsgemäß zu verwendete Gießplatte weist eine Oberseite auf, in der eine Mehrzahl von Vertiefungen als Negativformen des herzustellenden Produktes vorgesehen sind, auf deren Grundfläche erhaben und/oder vertieft ein Motiv und/oder eine Beschriftung ausgebildet ist, wobei die Gießplatte zusätzlich auch auf ihrer Unterseite mit einer Mehrzahl von nach außen offenen Vertiefungen als Negativform zum Abguß einseitig modellierter Produkte versehen ist. Die Vertiefungen auf der Unterseite können - wie die auf der Oberseite - auf ihrer Grundfläche erhaben und/oder vertieft ein Motiv und/oder eine Beschriftung aufweisen. Dabei können die einzelnen Gießformen jeder Gießplatte unterschiedliche Motive und/oder Beschriftungen unterschiedlicher Größe aufweisen. Zur leichteren Entformbarkeit kann eine Formschräge am Rand der Gießformen vorgesehen sein.

Um die erfindungsgemäße Gießplatte konstruktiv einfach auszugestalten, ist als zweckmäßige Ausführungsform vorgeschlagen, die Gießplatte als quadratischen oder rechteckigen, flachen, Hohlkörper auszubilden, dessen einander gegenüberliegende Oberseite und Unterseite mit nach innen einander entgegengerichteten mit nach außen offenen Gießformen versehen sind, wobei eine gleiche Stärke der beidseitig verwendbaren Gießplatten wie bei den bisher nur einseitig verwendbaren Gießplatten gegeben ist. Vorzugsweise sind die Gießplatten-Hohlkörper aus Polycarbonat einteilig oder zweiteilig verklebt bzw. miteinander verschweißt hergestellt.

Weitere Einzelheiten, Merkmale und Vorteile des Gegenstandes der Erfindung ergeben sich aus der nachfolgenden Beschreibung der zugehörigen Zeichnung in der eine bevorzugte Ausführungsform der Erfindung schematisch dargestellt ist. In der Zeichnung zeigt:
- Fig. 1: einen Teil einer Gießplatte im Schnitt,
- Fig. 2: eine Draufsicht auf die Gießplatte der Fig. 1,
- Fig. 3: eine Ansicht von unten auf die Gießplatte der Fig. 1,
- Fig. 4: eine Herstellungsanlage für Schokoladenprodukte in einer schematischen Seitenansicht und
- Fig. 5: eine perspektivische Ansicht eines Produktes von beiden Seiten.

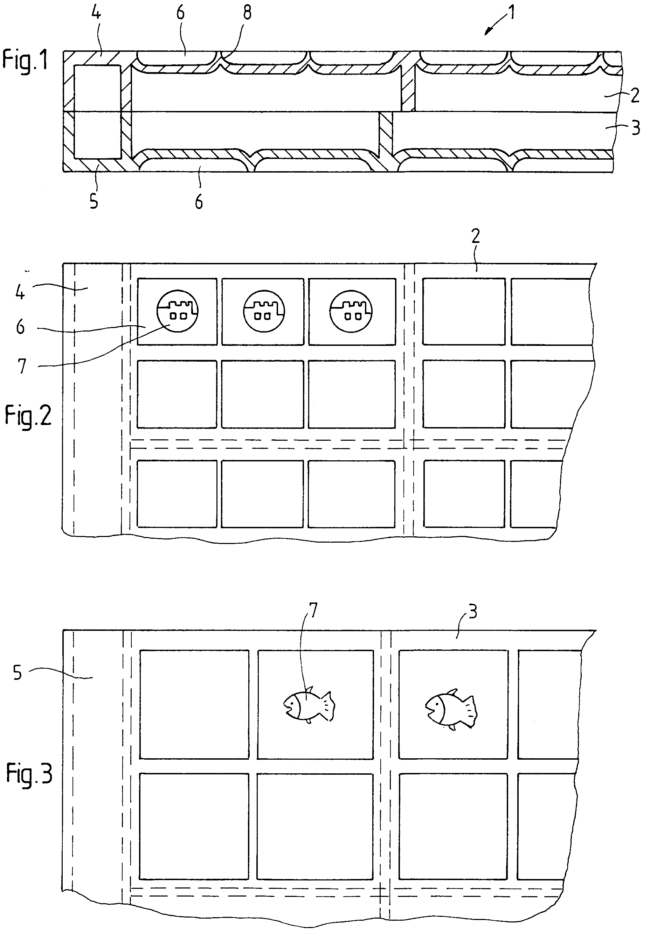

Zur Herstellung tafelförmiger Schokolade bzw. Schokoladenbackwaren werden Gießplatten 1 verwendet, die als flacher, rechteckiger Hohlkörper aus Polycarbonat hergestellt werden, indem eine Oberform 2 und eine Unterform 3 umgekehrt zueinander miteinander verschweißt oder verklebt werden, derart, daß eine Oberseite 4 und eine Unterseite 5 vorliegen, die jeweils zum Abguß einseitig modellierter Schokolade bzw. Schokoladenbackwaren mit Gießformen 6 versehen sind. Die Gießformen 6 auf Oberseite 4 und Unterseite 5 stellen in Querreihen und Längsreihen angeordnete Vertiefungen dar, die jeweils die Negativform des herzustellenden Produktes sind. Dabei ist auf der Grundfläche erhaben und/oder vertieft ein Motiv 7 und/oder eine Beschriftung ausgebildet. Derartige Motive sind in Fig. 2 und Fig. 3 der Zeichnung schematisch angedeutet. Es handelt sich konkret um die in Fig. 2 von oben her gesehene Oberform 2, deren Oberseite 4 die Gießformen 6 in Reihen als Vertiefungen aufweist, welche wiederum als Motiv 7 mit einer vertieft ausgebildeten Burg-Darstellung versehen sind.

In der gleichen Weise ist auch die Unterform 3, aus der die Unterseite 5 der Gießplatte 1 gebildet ist, gemäß Fig. 3 der Zeichnung mit in Reihen angeordneten Gießformen 6 als Vertiefungen versehen, die mit erhaben ausgebildeten Motiven 7 in Form von Fisch-Darstellungen versehen sind. Zur leichteren Entformbarkeit weist jede, nach außen offene Gießform 6 eine Formschräge 8 am Rand auf. Grundsätzlich ist jede Gießform 6 gegenüber dem fertigen Gußstück, d.h. der Schokoladenware, um das Schwindmaß der Schokolade größer auszuführen, um ein ungehindertes Entformen zu ermöglichen.

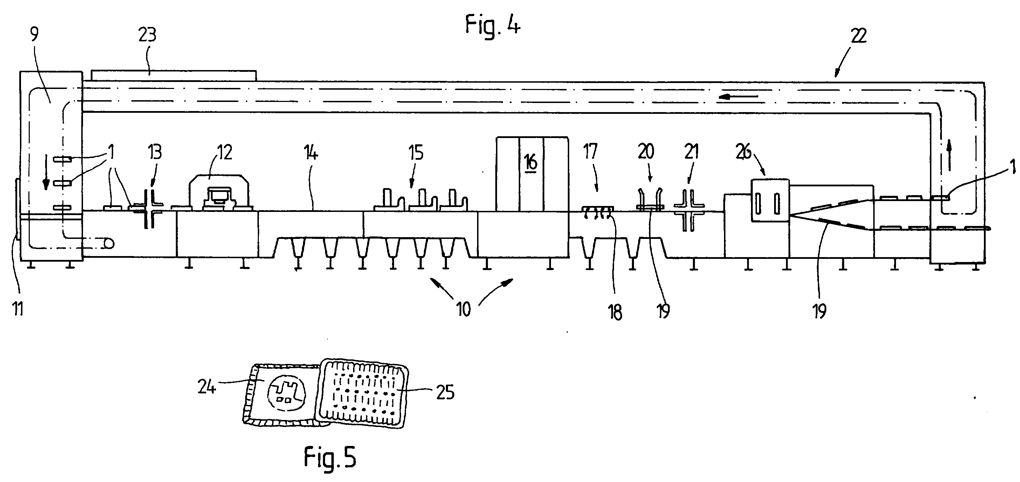

Gießformen 1 werden im Rahmen der Herstellung auf Produktionsanlagen eingesetzt, wie sie schematisch der Fig. 4 der Zeichnung zu entnehmen sind, die eine Mehrzahl in Produktionsrichtung hintereinander angeordnete Stationen aufweisen, durch welche die Gießformen in Reihe hintereinander angeordnet auf einer Transportstraße im Kreislauf gefahren werden. Hierzu werden die Gießformen 1 in einer Beschickungsstation 9 auf die Transportstraße 10 entweder durch eine Tür 11 oder im Rücklauf von oben aufgegeben und hintereinander einer Gießmaschine 12 zugeführt. Die beidseitig mit Gießformen 6 versehenen Gießplatten können in einer der Gießmaschine 12 vorgeschalteten 180°-Wendevorrichtung 13 aus ihrer Beschickungsposition heraus gewendet werden, so daß es möglich ist, wahlweise die Oberseite 4 oder die Unterseite 5 jeder Gießform dem Gießprozeß auszusetzen und daher an dieser Stelle einen Motivwechsel vorzunehmen.

Mit der Gießmaschine 12 wird Schokoladenmasse, die auf eine Temperatur von etwa 30° C temperiert ist, portioniert in die Gießformen 6 zu Tafeln vergossen, wobei auf der nachfolgenden Rüttelstrecke 14 eine Verdichtung erfolgt, insbesondere auch, um einen guten Motivabguß oder Abdruck in jeder Gießform 6 sicherzustellen. An die Rüttelstrecke 14 schließt sich eine wahlweise aktivierbare Gebäckeinlegestrecke 15 zur Herstellung von Schokokeksen oder Schokowaffeln an, in der in die noch nicht ausgehärtete Schokoladen-Masse jeder Gießform 6 von oben ein Gebäckstück eingelegt wird.

Die Gießformen 1 werden nun über mehrere Kühlzonen 16, von denen in der Zeichnung nur eine dargestellt ist, abgekühlt und anschließend in einer Twiststation 17 an gegenüberliegenden Seiten gegeneinander verdreht, um die Produkte aus den Gießformen 6 zu lösen. Die hintereinander angeordneten Gießplatten 1 sind eingezeichnet, wobei die gegeneinander gerichteten Pfeile 18 den Vorgang des Verdrehens verdeutlichen sollen.

Die in der Art bereits lose in den Gießformen 6 der Gießplatten 1 befindlichen Schokoladentafeln oder Schokogebäckstücke werden in den nachfolgenden Stationen der Anlage entnommen, indem zunächst jede Gießform 1 mit einem geometrisch angepaßten Deckel in Form einer Gegenplatte 19 durch einen Deckelaufleger 20 abgedeckt wird und in einer Wendestation 21 um 180° gewendet wird, so daß die Produkte auf der unten angeordneten Gegenplatte 19 angeordnet sind und sich darüber die Gießplatte 1 befindet. Im Anschluß an eine Ausklopfstation 26 werden die Gießplatten 1 von den Gegenplatten 19 mit den Produkten getrennt, die am Warenaustritt einer Verpackung zugeführt werden. Die Gießplatten 1 dagegen werden über Kopf mit einer nicht näher beschriebenen Rücktransporteinrichtung 22 zur Beschickungsstation 9 zurückgeführt, wobei vorgeschaltet eine Formenerwärmung bei 23 vorgenommen wird.

Für den nächsten Durchgang wird nun entschieden, ob ein Motivwechsel insgesamt erfolgt oder hintereinander verschiedene Motive dem Gießvorgang ausgesetzt werden, wozu in der Wendestation 13 entweder ein Durchlauf der Gießplatten im Anlieferungszustand erfolgt oder mittels eines Wendevorgangs um 180° die gegenüberliegende Seite der Gießplatte, die mit Gießformen anderer Motive ausrüstet ist, zur Gießmaschine 12 weitertransportiert werden.

Fig. 5 der Zeichnung zeigt einen Schokokeks als Herstellungsprodukt der oben beschriebenen Anlage mit seiner Schokoladenseite 24 und seiner Gebäckseite 25, wobei die Schokoladenseite 24 mit einem erhaben und vertieft in der Schokolade ausgebildeten Motiv 7 in Form einer Burgdarstellung sowie Randeinprägungen versehen ist.

### Bezugszeichenliste

- 1: Gießplatten
- 2: Oberform
- 3: Unterform
- 4: Oberseite
- 5: Unterseite
- 6: Gießformen
- 7: Motiv
- 8: Formschräge
- 9: Beschickungsstation
- 10: Transportstraße
- 11: Tür
- 12: Gießmaschine
- 13: Wendevorrichtung
- 14: Rüttelstrecke
- 15: Gebäckeinlegestrecke
- 16: Kühlzonen
- 17: Twiststation
- 18: Pfeile
- 19: Deckel/Gegenplatte
- 20: Deckelaufleger
- 21: Wendestation
- 22: Rücktransporteinrichtung
- 23: Formenanwärmung
- 24: Schokoladenseite
- 25: Gebäckseite
- 26: Ausklopfstation

## Patentansprüche

1. Verfahren zur Herstellung von tafelförmiger Schokolade oder Schokoladenbackwaren, wie Schokokeksen und Schokowaffeln mit einer Backwarenseite (25) und einer Schokoladenseite (24), deren Oberfläche ein Motiv (7) und/oder eine Beschriftung erhaben und/oder vertieft aufweist, bei dem flüssige Schokolade in jede Gießform (6) einer Gießplatte (1) gegossen wird, die jeweils ein Negativ der Schokoladenseite (24) darstellen, die Schokolade sodann abgekühlt wird, wonach die fertigen Schokoladentafeln bzw. Schokoladenbackwaren aus den Gießformen (6) ausgeschlagen und einer Verpackung zugeführt werden und abschließend die Gießplatte (1) zur erneuten Beschickung rückgeführt wird,
**dadurch gekennzeichnet,**
daß Gießplatten (1) verwendet werden, die auf ihrer Oberseite (4) und ihrer Unterseite (5) mit Gießformen (6) versehen sind, daß die Gießformen (6) der Oberseite (4) in an sich bekannter Weise mit flüssiger Schokolade beschickt werden, und daß nach dem Ausformen des Fertigerzeugnisses die Gießplatten (1) entweder in der vorgegebenen Position mit ihrer Unterseite (5) oder um 180° gewendet erneut mit ihrer Oberseite (4) dem nächsten Gießvorgang zugeführt werden, wobei wahlweise der gesamte Gießplattensatz gemeinsam oder jede einzelne Gießplatte (1) entweder mit ihrer Oberseite (4) oder mit ihrer Unterseite (5) dem nächsten Gießvorgang zuführbar sind.

2. Verfahren nach Anspruch 1, dadurch gekennzeichnet, daß Gießplatten (1) verwendet werden, die auf ihrer jeweiligen Oberseite (4) und Unterseite (5) mit unterschiedlichen Motiven (7) und/oder Beschriftungen in den Gießformen (6) versehen sind.

3. Verfahren nach Anspruch 1 oder 2, dadurch gekennzeichnet, daß die Gießplatten (1) nach dem Füllen der Gießformen (6) gerüttelt und nach dem Abkühlen der Schokolade, ggf. nach einem Twistvorgang, jeweils mit einer Gegenplatte (19) abgedeckt werden, sodann um 180° gewendet und unter Trennung der Gegenplatte (19) mit dem Fertigprodukt, welches einer Verpackung zugeführt wird, zum erneuten Befüllen der Gießformen rückgeführt werden.

4. Verfahren nach einem der Ansprüche 1 bis 3, dadurch gekennzeichnet, daß die Temperatur der Schokolade auf etwa 30°C beim Gießvorgang eingestellt wird.

5. Vorrichtung zur Durchführung des Verfahrens gemäß einem der Ansprüche 1 bis 4, gekennzeichnet durch die folgenden in Produktionsrichtung hintereinander angeordneten und durch eine Transportstraße (10) miteinander verbundenen Stationen:
a) Beschickungsstation für beidseitig mit Gießformen (6) versehene Gießplatten (1),
b) wahlweise aktivierbare Wendestation (21) für die Gießplatten (1),
c) Schokoladen-Gießmaschine (12),
d) Rüttelstrecke (14) für mit Schokolade befüllte Gießplatten (1),
e) wahlweise aktivierbare Gebäckeinlegestrecke (15) zur Herstellung von Schokokeksen oder Schokowaffeln,
f) eine oder mehrere hintereinander angeordnete Kühlzonen (16),
g) eine Twiststation (17), in der jede Gießplatte (1) zur Vorbereitung der Entformung diagonal oder einander gegenüberliegend geringfügig gegeneinander verdreht wird,
h) Deckelaufleger (20) zum Abdecken jeder Gießplatte (1) mit einer Gegenplatte (19),
i) Ausformstation mit 180°-Wendevorrichtung (13) und getrennter Weiterführung der leeren Gießplatten (1) einerseits und der auf den Gegenplatten (19) angeordneten ausgeformten Fertigwaren andererseits zu einer Verpackungseinrichtung,
wobei für die Gießplatten (1) eine Rücktransporteinrichtung (22) zur Beschickungsstation (9) vorgesehen ist.

6. Vorrichtung nach Anspruch 5, gekennzeichnet durch eine Formenwechsler-Station.

7. Vorrichtung nach Anspruch 5, dadurch gekennzeichnet, daß die Transportstraße (10) als Rollgang, Bandstraße oder Kettentransporteinrichtung ausgebildet ist.

8. Gießplatte zur Herstellung von tafelförmiger Schokolade oder Schokoladenbackwaren, wie Schokokeksen und Schokowaffeln mit einer Backwaren- (25) und einer Schokoladenseite (24), deren Oberfläche ein Motiv und/oder eine Beschriftung erhaben und/oder vertieft aufweist, mit einer Oberseite (4), in der eine Mehrzahl von Vertiefungen als Negativformen (Gießformen 6) des herzustellenden Produktes vorgesehen sind, auf deren Grundfläche erhaben und/oder vertieft das Motiv (7) und/oder eine Beschriftung ausgebildet ist,
**dadurch gekennzeichnet,**
daß die Gießplatte (1) zusätzlich auch auf ihrer Unterseite (5) mit einer Mehrzahl von nach außen offenen Vertiefungen als Negativform (Gießformen 6) zum Abguß einseitig modellierter Produkte versehen ist.

9. Gießplatte nach Anspruch 8, dadurch gekennzeichnet, daß die Vertiefungen auf der Unterseite (5) auf ihrer Grundfläche erhaben und/oder vertieft ein Motiv (7) und/oder eine Beschriftung aufweisen.

10. Gießplatte nach Anspruch 8 oder 9, dadurch gekennzeichnet, daß die einzelnen Gießformen (6) jeder Gießplatte unterschiedliche Motive (7) und/oder Beschriftungen unterschiedlicher Größe aufweisen.

11. Gießplatte nach einem der Ansprüche 8 bis 10, dadurch gekennzeichnet, daß jede Gießform (6) eine Formschräge (8) am Rand aufweist.

12. Gießplatte nach einem der Ansprüche 8 bis 11, dadurch gekennzeichnet, daß sie als quadratischer oder rechteckiger flacher Hohlkörper ausgebildet ist, dessen einander gegenüberliegende Oberseite (4) und Unterseite (5) mit nach außen offenen Gießformen (6) versehen sind.

13. Gießplatte nach einem der Ansprüche 8 bis 12, dadurch gekennzeichnet, daß sie aus Polycarbonat einteilig oder zweiteilig verklebt bzw. miteinander verschweißt hergestellt sind.
